# EUROPEAN PATENT APPLICATION

(11) **EP 1 189 372 A2**
(43) Date of publication of application: **20.03.2002**
(21) Application number: 01306934.9
(22) Date of filing: 15.08.2001
(51) Int. Cl.: H04H 1/00

(54) **Audio signal processor comprising a means for embedding an audible watermark in an audio signal, audio player comprising a means for removing the audible watermark and audio distribution system and method using the audio signal processor and the audio player**

(30) Priority: 21.08.2000 JP 2000249359
(71) Applicant: Matsushita Electric Industrial Co., Ltd., Kadoma-shi, Osaka-fu, 571-8501 (JP)
(72) Inventor: Katayama, Taro, Toyonaka-shi, Osaka-fu (JP); Ogawa, Tomoki, Amagasaki-shi, Hyogo-ken (JP); Serikawa, Mitsuhiko, Nishinomiya-shi, Hyogo-ken (JP)
(74) Representative: Dempster, Benjamin John Naftel

(57) **Abstract**

An audio signal processor, audio player, audio distribution system and the method thereof which permit sample playback and are applicable to uncompressed audio contents, and wherein the sound quality is possible to control per frequency band.

Provided are an audio signal processor provided with embedding means for embedding in the audio signal a watermark audible to the human sense of hearing when the audio signal is played back, and an audio player provided with removing means for removing, using a specific key, the watermark embedded in the audio signal, and an audio distribution system and a method thereof in which those apparatuses are utilized.

## Description

The present invention relates to an audio signal processor, audio player, audio distribution system and the method thereof. More particularly, the present invention concerns audio signal processor, audio player, audio distribution system and the method thereof in which the copyright for audio contents is protected using a watermark technique.

With a fast diffusion of the Internet and progress in audio compression technologies exemplified by MP3 (MPEG Audio Layer-3) and AAC (Advanced Audio Codec) in recent years, the audio distribution system is getting popular. In the audio distribution system, audio contents, namely, audio signals are compressed and electronically distributed to the consumers via a network (Internet), who download audio contents and play back them in a corresponding audio player.

The distribution (sale) of audio contents by the audio distribution system needs no salesroom space unlike sale of audio contents as at CD shops. Therefore, audio contents by little known artists with no much sales expected also can be offered to consumers without difficulty. Furthermore, in an environment where a network is accessible, the consumer can obtain those audio contents at any time.

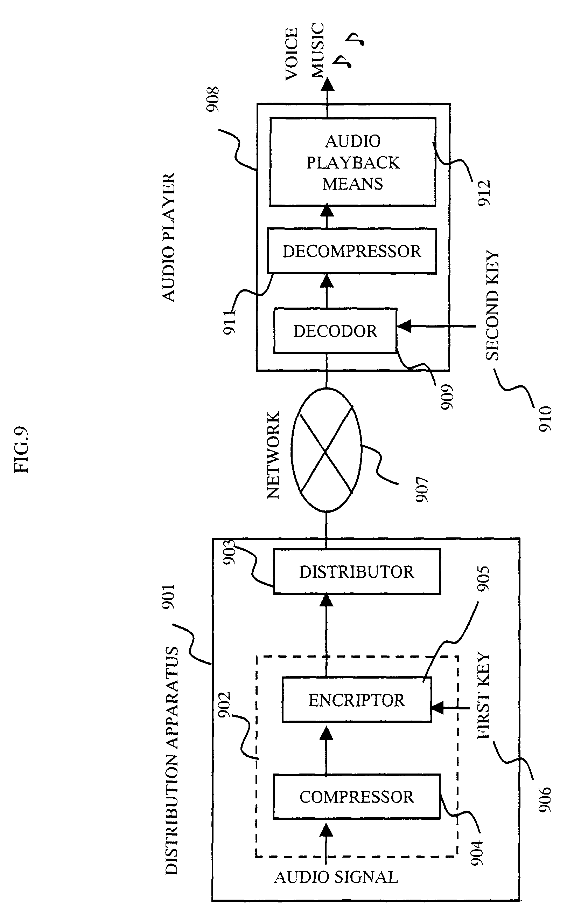

The prior art music distribution apparatus and audio player will be explained with reference to FIG. 9.

In a first prior art, distribution apparatus 901 is provided with an audio signal processor 902 and a distributor 903. The audio signal processor 902 comprises a compressor 904 for compressing audio signals and an encryptor 905 for encrypting the compressed audio signals using first key 906. The audio signals processed by the compressor 904 and the encryptor 905, that is, audio signal distribution data are stored in the distributor 903 and are sent to a consumer on request or the like from an audio player 908 for playback of the audio signal data via a network 907.

For the consumer to playback and listen to the audio signal distribution data thus distributed, a decoder 909 in the audio player 908 decodes (decrypts) the audio signal distribution data using a second key 910. Furthermore, a decompressor 911 in the audio player 908 decompresses the decoded (decrypted) audio signal distribution data, and audio playback means 912 playback the data.

The second key 910 used by decoder 909 is information that can be obtained via the network 907 or the like by the consumer paying a fee through electronic settlement of accounts. In other words, the consumer who has not purchased second key 910 can not decode audio signal distribution data and can not play back audio contents. Therefore, a contents provider which distributes the audio signal distribution data can prevent audio contents from being illegally copied, whereby the copyrights can be prevented.

Next, a second prior art is disclosed as AN AUDIO ENGINEERING SOCIETY PREPRINT 5100 ("Secure Delivery of Compressed Audio by Compatible Bitstream Scrambling," Eric Allamanche et al., Fraunhofer Institute for Integrated Circuits). This is a technique for encrypting the audio contents by encryptor 905 in the first prior art, for example. That is, only part of the already compressed audio signals is encrypted. This encryption method involves encrypting the least significant bit of audio data, each quantinzed per frequency band or rearranging some values of spectral coefficient according to a specific rule. Specifically, for example, it is a technique in which the distribution apparatus 901 encrypts the lower order bits of the spectral coefficient in a compressed audio data by using exclusive OR with a key of the same bit number and the audio player 908 decodes the lower order bits. That apparently degrades audiologically the sent audio contents in sound quality. Meanwhile, if the consumer buys a second key and inputs it in a audio player 908, partly encrypted audio data will be decoded, and audio contents of high sound quality can be played back.

This way, the contents provider can distribute low sound quality audio contents to consumers as sample to promote the sales. Before deciding whether to buy key, the consumer can perform sample-playback to audio contents though the contents are low in sound quality.

However, the prior art music distribution and audio player present the following problems.

First, in the first prior art technique, the second key 910 has to be bought to reproduce the encrypted audio contents. In other words, all the audio signals forming the distributed audio contents are encrypted, and the original audio signals are not retained at all and impossible to play back or, if ever played back, it is a collection of noises quite different from the original audio contents. Therefore, the consumer can not perform sample-playback to the audio contents before paying for the second key 910.

Next, the second prior art is a technique for compressed audio contents and can not control the sample playback of contents which are not compressed contents. Therefore, this technique can not be applied in case audio contents are sent with the high sound quality of music CD (compact disc) retained.

Furthermore, in the second prior art technique in which for the least significant bit of the spectral coefficient of compressed audio data, exclusive OR is used with the key of the same number of bits, the same key has to be used for encryption and decoding. Therefore, the problem is that if the key is disclosed by a malicious third party, consumers can play back high quality audio contents using the disclosed key. Also, a method in which the lower order bits are exchanged with each other has a problem. That is, it is difficult to quantitatively predict to what extent the sound quality will degrade. Some kinds of audio data do not degrade acoustically so much. Therefore, audio contents processed by this method have to be checked if the processing is effective enough.

Accordingly, it is an object of the present invention to provide to an , audio signal processor, audio player, audio distribution system and the method thereof wherein audio contents that permit sample playback can be prepared, and which are applicable to uncompressed audio contents and furthermore make it possible to control sound quality per frequency band.

To achieve the foregoing object, the present invention is provided with the following means.

That is, the present invention presupposes processing the audio signal for changing a format distributable through a network. Here, embedding means for embedding in the audio signal a watermark of which a signal level audible to the human sense of hearing when audio signal is played back. It is to be understood that audio signal include music, sound and voice signals.

Thus, the audio signal has a watermark embedded in it that can be perceived by the human sense of hearing. With the watermark as noise or the like, the audio signal containing the noise can be performed sample-playback. Needless to say, if the watermark that is embedded is removed, the audio signal can be played back as high quality sound. It is also possible to provide sample audio content and high quality audio content in one and the same signal.

Furthermore, other arrangements are possible. In one of the other arrangements, the compressor for compressing the watermark embedded audio signal in a specific method is provided after the embedding means. In another arrangement, the compressor is provided before the embedding means.

Under those arrangements, even such cases where the supplier of the audio signal and the contents provider of the audio signal are different can be dealt with flexibly. In addition, the volume of processing for embedding the watermark can be reduced.

Furthermore, the system can be so arranged that the embedding means inputs the audio signal alone and generates a watermark on the basis of the audio signal. In this case, since no specific signals need to be inputted as noise, the configuration of equipment can be simplified.

It is noted that for the watermark embedded audio signal to be played back as high quality sound, the audio player is to be provided with removing means for removing the watermark of a signal level perceivable by the human sense of hearing that is embedded in the audio signal. The watermark is removed using a specific key.

In an another configuration, the system is provided with a band separator for separating the audio signal into a plurality of frequency band signals, each signals have a specific frequency band respectively, embedding means for embedding a key as watermark in a specific frequency band signals having the specific frequency band of the plurality of frequency band signals, and high quality sound part encryptor for encrypting a frequency band signal other than said plurality of frequency band signals in which said watermark is embedded.

In this configuration, the system is so arranged that only the low quality sound part can be played back since a specific frequency band alone can be encrypted so that the audio signals including the high sound quality part can be played back by obtaining a specific key.

In another configuration, there are provided a scalable compressor for separating the audio signal into the basic part and the enhanced part using scalable compression and enhanced part encryptor for encrypting the enhanced part using a specific key.

In still another configuration, the system is provided with a noise parameter generator for generating a noise parameter to produce noise, a noise generator for generating noise signals on the basis of the generated noise parameter, amplifier for amplifying the noise signal to a signal level audible to the human sense of hearing, a first adder for adding the noise signal to the audio signal, a watermark signal generator for generating a watermark signal with the noise parameter, and a second adder for adding the watermark signal to the audio signal to which the noise signal has been added.

In the above configuration, an announcement can be used as noise signals so that playback does not make the listener feel unpleasant. Furthermore, the announcement can be utilized for various purposes including notifying that the noise signal can be removed if a fee is paid for the key. In addition, since the noise parameter is embedded as an watermark, the management of key will be easy if a second key to extract the watermark is additionally prepared. That is, even in case a plurality of audio signals are prepared that contain noises based on a plurality of noise parameters, only one kind of the second key will serve the purpose.

Still more configurations are possible. In one of them, the system is provided with embedding means for embedding music ID information in the audio signal as a watermark to specify the audio signal and an encryptor for encrypting the audio signal in which the watermark is embedded. In another configuration, the music ID information contains the number of sample playback that are permitted.

Because the music ID information is embedded as a watermark in the above configuration, therefore, there is no possibility that music ID information will be lost in digital/analog (D/A) conversion or analog/digital (A/D) conversion, and the rightful user who has a key exclusive to the audio content can play back the audio signal into a high quality sound. Furthermore, since the music ID information is embedded as a watermark, the music ID information is difficult for a binary editor or the like to modify, whereby the copyright protection is further reinforced. With the number of sample playback embedded as a watermark, in addition, the consumer is allowed to listen to the audio content a specific number of times only before deciding whether to buy the key exclusive to the music.

FIG. 1 is a hardware block diagram showing the outline of a audio distribution system according to the present invention.

FIG. 2 is a conceptual diagram of embedding and removing a watermark according to the present invention.

FIG. 3 is a hardware block diagram showing the outline of an audio signal processor and restoration means according to a second embodiment of the present invention.

FIG. 4 is a schematic diagram showing the outline of the compressor and frequency band separator according to the second embodiment of the present invention.

FIG. 5 is a schematic diagram showing the outline of an audio signal processor and restoration means according to a third embodiment of the present invention.

FIG. 6 is a hardware block diagram showing an audio signal processor and restoration means of a fourth embodiment of the present invention.

FIG. 7 is a schematic diagram showing the outline of an audio signal processor and restoration means according to a fifth embodiment of the present invention.

FIG. 8 is a schematic diagram showing the outline of an audio signal processor and restoration means according to a sixth embodiment of the present invention.

FIG. 9 is a prior art distribution system.

FIG. 10 is a first diagram explaining the masking level.

FIG. 11 is a second diagram explaining the masking level.

The embodiments of the present invention will now be described with reference to the accompanying drawings. It is to be understood that the following embodiments are examples embodying the present invention and do not limit the technical scope of the invention.

### Embodiment 1

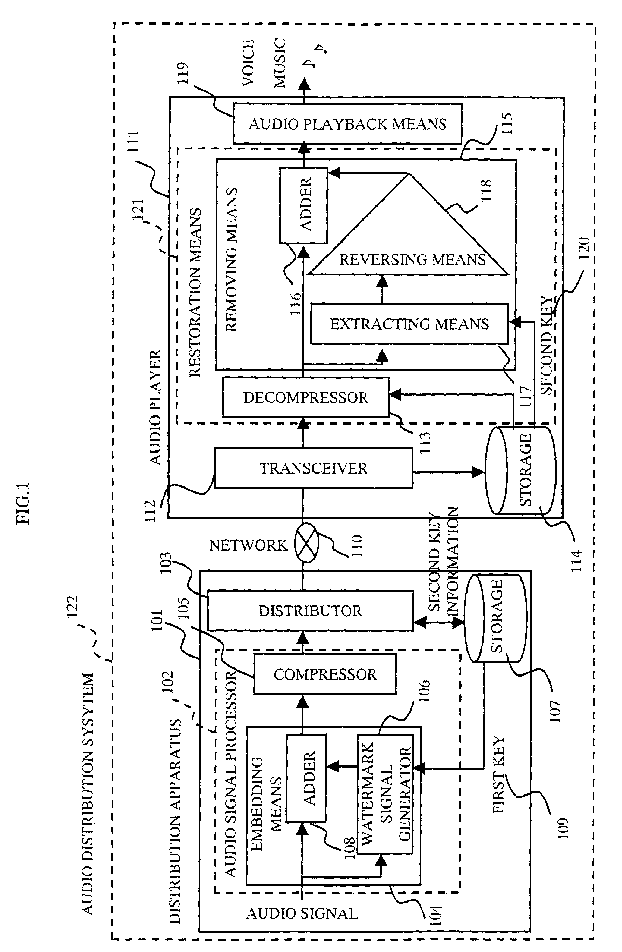

First, the outline of a distribution system according to the present invention will be explained with reference to FIG. 1. A audio distribution system 122 shown in FIG. 1 is formed of a distribution apparatus 101, a audio player 111 and a network 110. The distribution apparatus 101 is to convert audio signals into audio signal distribution data and is made up of an audio signal processor 102, a distributor 103 and a storage 107. The audio signal processor 102 converts inputted audio signals into audio signal distribution data and sends the data to the distributor 103. The distributor 103 stores the audio signal distribution data in the storage 107, and, furthermore, sends the audio signal distribution data via the network 110, for example, in accordance with a request to send by audio player 111. The distributor 103 also sends key information in accordance with a request for key by the audio player 111, which will be described later.

The audio player 111 is formed of a transceiver 112, a restoration means 121, an audio playback means 119 and a storage 114. In accordance with a request by the consumer, the audio player 111 makes a request for distribution of specific distribution data to the distribution apparatus 101 via the network, and restores the distributed distribution data in a method corresponding to the processing method for the audio signal processor 102. The audio signal that is restored to a playable form will be outputted acoustically by the audio playback means 119. On request by the consumer, the transceiver 112 also receives a key corresponding to the audio signal distribution data. The concrete examples of the audio player 111 include a portable player, a personal computer and audio equipment. The term "audio signal" as used herein means data making up audio contents of such as a popular song including sound and voice signals. Needless to say, sound and/or voice signal alone is audio contents, too. The audio signal distribution data means audio signals processed to be sent and received via wire or wireless network 110 represented by the Internet.

Next, the procedures in the distribution apparatus 101 and the audio player 111 will be explained in detail with reference to FIG. 1.

First, an audio signal is inputted into the distribution apparatus 101. The way of inputting the audio signal is not restrictive in particular. For example, with a separate audio player connected to the distribution apparatus 101, the signal that is inputted from the reproduction apparatus may be taken as audio signal. The examples of the audio player include a CD player and record player. The audio signals are sent in usual sound data formats such as linear pulse code modulation (PCM) format and analog format. In case the output of the audio player is an analog signal, the signal is converted into digital signal in advance as necessary.

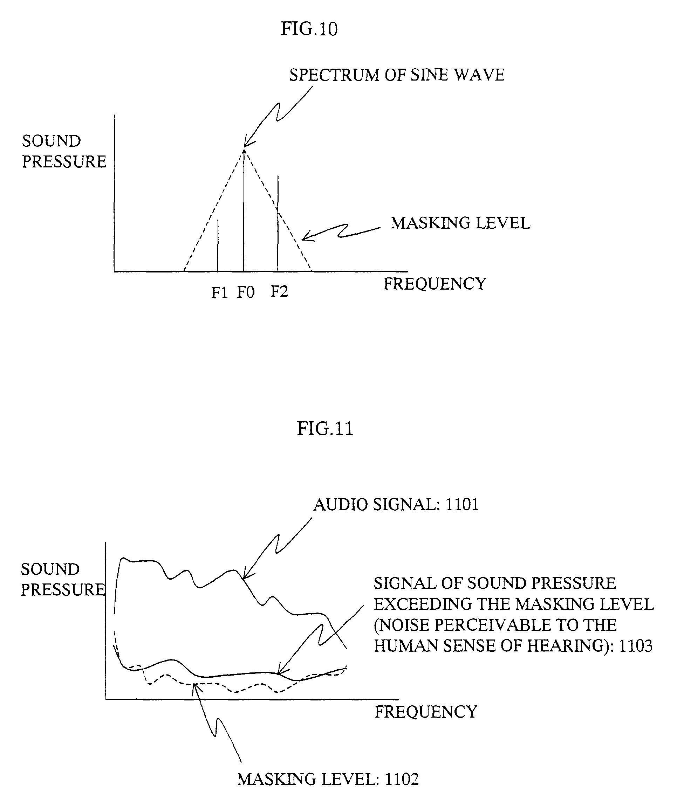

The inputted audio signal will have a watermark embedded by embedding means 104. Generally, this watermark is information such as ID which is necessary for control but has nothing to do with the audio signals. To put it another way, this watermark is a digital signal that is embedded in the audio signal according to a specific rule and which can be taken out using a method corresponding to the specific rule. Here in Embodiment 1, the watermark is adjusted to a level of sound perceivable (audible) by the human sense of hearing and embedded using a first key, which will be described later, whereby the sound and/or voice to be outputted when the audio signal is played back can be degraded. As used herein, the term "a level of sound perceivable by the human sense of hearing signal" means a signals level higher than the masking level of audio signals that change every moment, for example. The term "masking" is a phenomenon that when man hears a sound called "Masker," he comes not to perceive a sound close to the frequency of a sound called "Maskee." And the threshold limit value between the sound pressure level where "Maskee" can be perceived and the sound pressure level where that can not is called the masking level. FIG. 10 is an example of a sine wave, and the frequency f0 is a Masker and the dotted line indicates the masking level. In this case, the sine wave with frequency f1 is below the masking level and is not perceived by the human sense of hearing, while the sine wave with frequency f2 is a sound of a sound pressure above the masking level and can be perceived by the human sense of hearing. FIG. 11 is an example of audio signal 1101 at a point of time. Here, if the audio signal 1101 is given an addition of a signal 1103 of a sound pressure exceeding the masking level 1102 in at least part of the band, the component of the signal to which the masking level 1102 is added is perceived by the sense of hearing. While the masking level value depends on audio signals, it is reported in a study by Egan et al. (On the Masking Pattern of a Simple Auditory Stimulus, J. Acous, Soc. Am. 22, 622-630, 1950) that if, for example, a band noise at 80 dB centering around 400 Hz is a Masker, the masking level at 400 Hz is about 60 dB. In case of audio signal, the masking level changes every moment depending on the characteristics of the audio signals. If, therefore, a watermark signal of a sound pressure level higher than the masking level that can change every moment is added to the audio signal, it will be possible to embed a watermark of a signal level that can be perceived by the human sense of hearing. The embedding of watermark by embedding means 104 will be explained in detail later.

The audio signal with a watermark embedded by the embedding means 104 is then compressed to a format of audio signal distribution data by compressor 105. The compression format of the audio signal distribution data is MP3, AAC or the like. But the audio signal does not always have to be compressed though the data size will be large unless the audio signal is compressed, and the linear PCM as it is will do, too. That is, the audio signal processor 102 embeds a watermark in an inputted audio signal and, as necessary, compresses it.

Then, the watermark is embedded, and the compressed audio signal is transmitted to distributor 103. Receiving the compressed audio signal with the watermark embedded therein, the distributor 103 adds to the audio signal the address information of the distribution apparatus 101 and identification information to specify this audio signal and stores the audio signal in storage 107 as audio signal distribution data. It is noted that the distributor 103 is to store in the storage 107 many kinds of audio signal distribution data according to the memory capacity of the storage 107. The audio signal distribution data thus stored are sent to the audio player 111 via the network 110 on request by the audio player 111, for example.

When received by the transceiver 112 of the audio player 111, the audio signal distribution data thus sent is once stored in the storage 114. Then, decompressor 113 in the restoration means 121 reads out the audio signal distribution data stored in the storage 114 and decompresses the audio signal distribution data in a method matched with the compression carried out by the compressor 105. But the audio signal distribution data which have not been compressed by the compressor 105 will not be decompressed, either. For sample playback only or the like, the audio signal distribution data may be directly transmitted to the decompressor 113 from the transceiver 112 without being stored in the storage 114.

The decompressed audio signal distribution data is transmitted to the removing means 115 in the restoration means 121, and the watermark embedded by the embedding means 104 is removed. The removal of the watermark will be explained in detail later.

With the watermark removed, the audio signal distribution data is transmitted to audio playback means 119 and is outputted acoustically by the audio playback means 119.

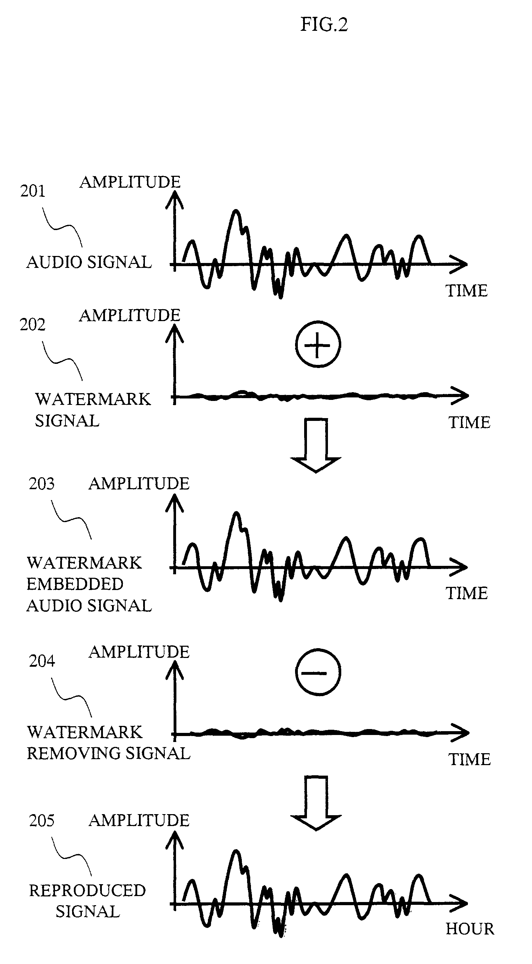

There will be described the procedures at embedding means and removing means with reference to FIG. 1 and FIG. 2.

In the embedding means 104, an inputted audio signal is transmitted to adder 108 and watermark signal generator 106. An example of the audio signal transmitted to the adder 108 and the watermark signal generator 106 is shown as an audio signal 201. Receiving the audio signal 201, the watermark signal generator 106 generates a watermark signal 202 on the basis of the audio signal 201 , and the first key 109 stored in advance in storage 107.

The watermark signal 202 generated here is a level of signal (noise) audible to the human sense of hearing when reproduced. In other words, a watermark has to have merely a level of signal audible to the human sense of hearing. There is no need to input in the watermark signal generator 106 a significant digital signal such as, for example, control information like the prior art watermark.

Then, the watermark signal 202 is handed over to the adder 108 from the watermark signal generator 106. The adder 108 adds the inputted audio signal 201 and the watermark signal 202 to generate a watermark embedded audio signal 203. Here, the watermark embedded audio signal 203 is almost identical with the audio signal 201 in waveform but slightly different because the watermark signal 202 is added. Since the watermark embedded audio signal 203 is given an addition of the watermark signal, the watermark signal 202 (noise) as well as the audio signal is played back . In other words, the watermark embedded audio signal is the information of audio signal 201 added with noises.

The watermark embedded audio signal 203 is compressed by the compressor 105 as necessary and becomes audio signal distribution data with the address information and identification information added thereto, and sent to the audio player 111 via the network 110 and transmitted to removing means 115 by way of the decompressor 113 as set forth above.

Receiving the watermark embedded audio signal 203, the removing means 115 hands over the watermark embedded audio signal 203 to adder 116 and extracting means 117. Receiving the watermark embedded audio signal 203, the extracting means 117 searches the storage 114 and obtains a second key 120 for the watermark embedded audio signal 203. Then, the extracting means 117 generates a similar watermark signal based on the watermark embedded audio signal 203 using the watermark embedded audio signal 203 and the second key 120 stored in storage 114. The way in which the audio player 111 acquires the second key 120 will be described later.

Here, the similar watermark has almost the same waveform as the watermark signal 202. But while the watermark signal 202 is a signal generated on the basis of audio signal 201, the similar watermark is produced from watermark embedded audio signal 203 which is slightly different from the audio signal 201. Therefore, the similar watermark is slightly different from the audio signal 201 in waveform.

Next, the amplitude of the similar watermark signal generated on the basis of the watermark embedded audio signal 203 is reversed into watermark removing signal 204 by reversing means 118. Here, the watermark removing signal 204 generated by reversing the amplitude has an amplitude with a positive or negative sign opposite to that of the watermark signal 202. Therefore, if the watermark removing signal and the watermark signal 202 are added together, the two signals offset each other to a level of sound not audible to the human sense of hearing.

The watermark removing signal 204 generated by the reversing means 118 is then transferred to adder 116. The adder 116 acquires a reproduced signal 205 by adding the watermark embedded audio signal 203 and the watermark removing signal 204. That is, though the reproduced signal 205 is a signal with the watermark signal 202 (noise) removed from the watermark embedded audio signal 203, the quality of the reproduced sound will be as high as the audio signal inputted in the audio signal processor 102, because the noise is removed so much that the noise is not audible to humans.

The reproduced signal 205 is transferred to audio playback means 119. By playing back the reproduced signal 205, the audio playback means 119 permits the consumer to listen to a reproduced sound of high quality.

In this connection, in case no second key 120 for the watermark embedded audio signal 203 is found when the extracting means 117 searches the storage 114, the extracting means 117 can not generate a similar watermark signal from the watermark removing signal 204 and sends no signal to the reversing means 118. That is, the watermark embedded audio signal 203 is transferred to audio playback means 119 without the watermark signal removed. The audio playback means 119 plays back watermark embedded audio signal 203. In other words, the consumer listens to a reproduced sound of a degraded sound quality containing noise. But if a second key which will be explained later is purchased, the consumer can listen to a high-quality sound without difficulty.

There will be explained in detail the procedure for obtaining the key with reference to FIG. 1.

If the second key 120 for the watermark embedded audio signal 203 is not found when the extracting means 117 searches the storage 114, transceiver 112 lets the consumer know that a key is needed and urges the consumer to buy the key as by lighting an alarm lamp, indicating that on the display or announcing that.

When the transceiver 112 notifies the consumer that a key is needed, the consumer can indicate to the audio player 111 an intention to purchase the key by taking a specific procedure at the transceiver 112 (as by pressing a button). When the specific procedure is completed, the transceiver 112 reads out address information and identification information added to the watermark embedded audio signal 203 by distributor 103 and establishes a connection with the network 110.

After having been connected with the network 110, the transceiver 112 communicates with the distribution apparatus 101 on the basis of address information thereof stored in the watermark embedded audio signal 203.

While communicating with the distribution apparatus 101, the transceiver 112 sends the identification information read out by the transceiver 112 to the distribution apparatus 101 in the distributor 103.

Receiving the identification information, the distributor 103 does a procedure for charging on the basis of the identification information, and a procedure for payment is made between the audio player 111 and the distribution apparatus 101. Here, the payment is made by credit card, in electronic money, from the bank account or the like, the details of which will not be explained here.

If the payment procedure is completed and has no problem, the distributor 103 selects a second key for the watermark embedded audio signal 203 from the storage 107 on the basis of the identification information and sends the second key to the audio player 111. Receiving the second key, the transceiver 112 memorizes the key and the applicable identification information in the storage 114. Through that procedure, the audio player 111 can get the necessary key.

As set forth above, a watermark (noise) of a level audible to the human sense of hearing is added to the audio signal so that the audio contents (audio signal) can be performed sample-playback. Therefore, this technique can be applied to not only compressed audio contents but also uncompressed audio contents. It means that unlike the second prior art, the present technique retains high quality sound without compression and permits the sending of audible audio contents, too. Furthermore, if the audio signal is compressed or decompressed time-wise by using watermark, that is, even in case of slightly fast forwarding (play back), for example, the degree of the compression or decompression can be detected and the watermark can be removed. Regarding this case, audio signals are easier to handle than especially when noise alone is added.

Furthermore, because the same data can be used for the audio signal and the sample-playback audio signal, it is not necessary to prepare another data for sample playback. Even if one whole piece of music is made audible for sample playback, it will not impact the data storage capacity of the storage medium (storage 107 in Embodiment 1).

The consumer also can store a received audio signal with a watermark in the storage medium (storage 114 in Embodiment 1), which permits the consumer to freely pass to others the audio signal with a watermark stored in the storage medium, that is, free passing of audio signal distribution data among the consumers, which helps promote the sale of audio contents. In addition, because the consumer can not remove watermark information unless a fee is paid for the second key, the contents provider can protect the copyright of high sound quality contents and could charge a fee as necessary.

It is noted that since the prior art watermark technique is possible to apply, it goes without saying that the technique according to the present invention is easy to adopt. In Embodiment 1, furthermore, the present technique is not to embed significant information (that is extracted and further utilized) unlike the prior art. In generating a watermark (by watermark signal generator 106), therefore, the key and audio signal alone are inputted. There is no need to input the significant information. That makes it easy to prepare a watermark. In addition, since different watermarks are generated for different audio signals, the copyright can be protected more strictly. In case the watermark does not have to be encrypted, the key does not have to be inputted, either.

In Embodiment 1, the audio signal processor 102 may be provided as independent apparatus (that is, an audio signal processing apparatus). In this case, a storage other than the storage 107 is provided within the audio signal processing apparatus and the first key 109 is stored in the other storage, whereby the same function can be provided. The audio signal processing apparatus is provided as independent apparatus like that, whereby it is possible to send an audio signal with a watermark using the existing signal distribution means.

Furthermore, embedding means 104 may be provided as an independent apparatus (that is, an embedding means). In this case, embedding means 104 and compressor 105 become independent of each other. That permits free selection of techniques used for embedding and removing the watermark, and compression and decompression when an audio distribution system is constructed. This is especially useful when the audio signal supplier and the contents provider who distributes audio signal distribution data are different. In other words, the supplier of audio signal supplies watermarked audio signals alone, while the respective contents providers themselves perform compression on the basis of their respective methods, thus saving the audio signal supplier labor.

In the configuration of the audio signal processor 102 in the distribution apparatus 101, a watermark is embedded in the input of audio signal by embedding means 104, and then the audio signal with a watermark is compressed by compressor 105. Alternatively, compressor 105 may be provided before embedding means 104. In this case, the audio signal is first compressed by compressor 105, followed by embedding a watermark by embedding means 104. If the compressor 105 is provided before embedding means 104, the operation amount by embedding means 104 can be reduced.

In the above case, the audio signal can be reproduced by providing decompressor 113 after removing means 115 on the distribution apparatus side. In this case, however, reversing means 118 is not always necessary.

### Embodiment 2

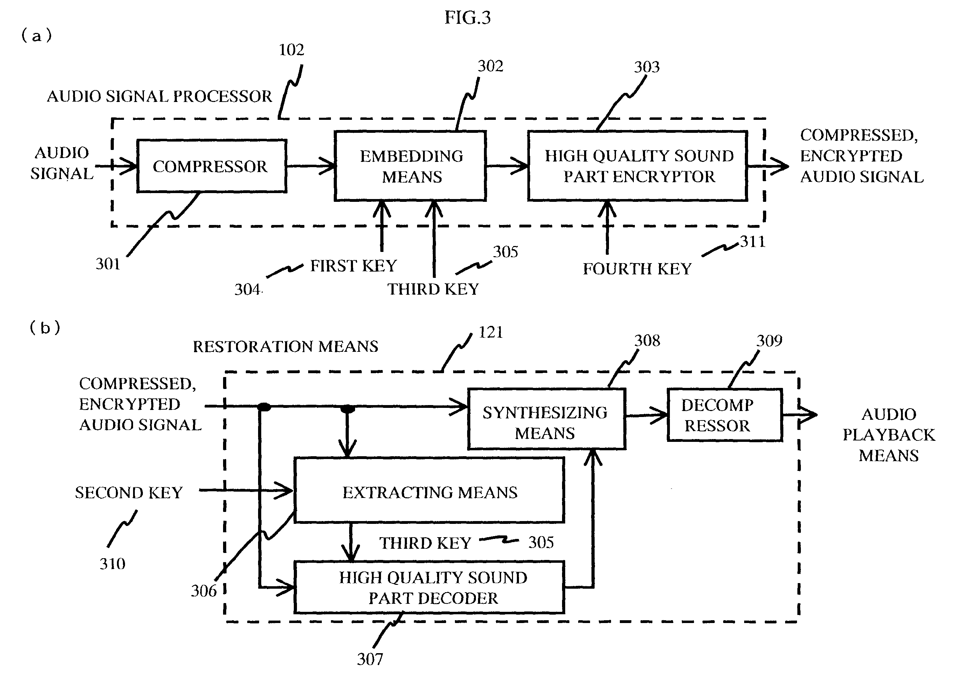

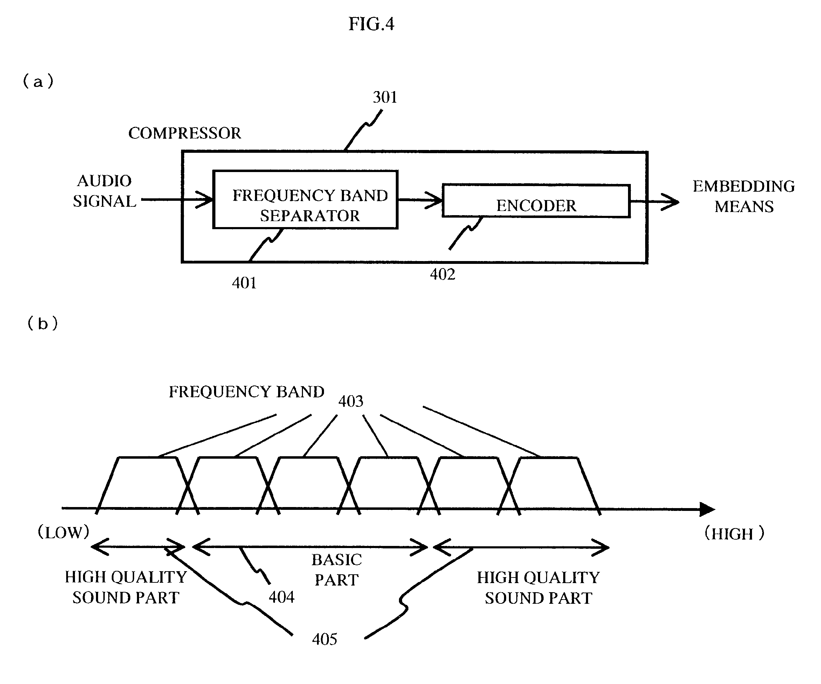

There will be explained the outline of an electronic audio distribution system according to Embodiment 2 of the present invention with reference to FIG. 1, FIG 3 and FIG 4. The electronic audio distribution system in Embodiment 2 is almost identical in configuration with that of Embodiment 1. The points where Embodiment 2 is different from Embodiment 2 alone will be explained. The audio signal processor 102 in Embodiment 2 is configured as shown in FIG. 3 (a). That is, the audio signal processor 102 is made up of a compressor 301, an embedding means 302, and a high quality sound part encryptor 303. As shown in FIG. 4 (a), furthermore, the compressor 301 is provided with a frequency band separator 401 and an encoder 402.

The audio signal inputted in the distribution apparatus 101 is first received by the frequency band separator 401 in the compressor 301. The received audio signal is separated by a band separation filter into a plurality of frequency bands 403 as shown in FIG. 4 (b) and sent to encoder 402.

Here, with regard to the audio signals separated into the bands as above, a basic part 404 and a high quality sound part 405 are defined as shown in FIG. 4 (b). The basic part 404 is a telephone voice band (300 to 3.4 kHz) and indicates the minimum frequency band required when audio contents are reproduced. Meanwhile, the high quality sound part 405 indicates a high frequency band that gives grace to the sound quality and a low frequency band that gives a heavy low sound power. For example, those are bands not lower than 3.4 kHz and not higher than 300 Hz.

Then, the encoder 402 encodes the audio signal separated into the plurality of frequency bands 403, which are then sent to the embedding means 302. Among the examples of encoding is Huffman coding. But the encoding is not always required.

Using a first key 304 read from the storage 107 shown in FIG. 1, the embedding means 302 embeds the third key 305 as watermark information in the basic part 404 of the audio signal that is separated into the plurality of frequency bands and encoded. Here, the third key 305 corresponds to a fourth key which will be described later. It is noted that the third key 305 is embedded as watermark information, but the watermark information does not have to be at a level of sound audible to the human sense of hearing as in Embodiment 1. Furthermore, the third key 305 is also to be read out from the storage 107. Then, the embedding means 302 sends to high quality sound part encryptor 303 the audio signal with the watermark signal embedded therein.

Then, the high quality sound part encryptor 303 encrypts the encoded high quality sound part 405 using the fourth key 311. In encryption of the high quality sound part 405, in this connection, it is conceivable that the whole code string of the high quality sound part 405 or only several bits on the least significant bit (LSB) side alone will be encrypted, for example. LSB means the part in the code string forming the high quality sound part 405 that has the least effect on the sound quality. Here, it is possible to control the sound quality of the high quality sound part 405 by adjusting the several bits to be encrypted.

In the next step, the high quality sound part encryptor 303 sends to distributor 103 the basic part 404 with the watermark signal embedded therein and the encrypted high quality sound part 405 as single compressed, encrypted audio signal.

The process is the same as in Embodiment 1 up to the point where the compressed, encrypted audio signal is sent to distributor 103 and then received by restoration means 121 via the transceiver 112 in the audio player 111. But Embodiment 2 is different from Embodiment 1 in that restoration means 121 in Embodiment 2 is configured as in FIG. 3 (b). In other words, the restoration means 121 is composed of an extracting means 306, a high quality sound part decoder 307, a synthesizing means 308, and a decompressor 309.

Using the second key 310 read out from the storage 114 shown in FIG. 1, the extracting means 306 reads out the third key 305 embedded in the basic part 404 of the compressed, encrypted audio signal received from the distribution apparatus 101. The third key 305 thus read out is sent to the high quality sound part decoder 307. In this connection, the way of acquiring the second key 310 is the same as that in Embodiment 1.

Then, high quality sound part decoder 307 decodes (decrypts) the encrypted high quality sound part 405 using the compressed, encrypted audio signal received also from the distribution apparatus 101 and the third key 305 read out by the extracting means 306 and sends the decoded high quality sound part 405 to synthesizing means 308.

Synthesizing means 308 synthesizes the basic part 404 of the compressed, encrypted audio signal received from the distribution apparatus 101 and the decoded high quality sound part 405 received from high quality sound part decoder 307, and sends the synthesized signal to decompressor 309 as compressed audio signal. The decompressor 309 decomposes the audio signal compressed in a method corresponding to that for the compression means 301 and outputs the same. After that, the audio signal outputted from the decompressor 309 is played back acoustically by audio playback means 119 the same way as Embodiment 1.

It is noted that the third key 305 stored in the basic part 404 is read out using the second key 310. But in case the restoration means 121 has not the second key 310, the high quality sound part decoder 307 can not decode the encrypted high sound quality part. Therefore, since decompressor 309 can not decompress the high sound quality part, the user can not play back the audio contents. But the basic part 404 is not encrypted, and the audio contents can be listened to though the sound is of a low quality.

Thus, the user can sample listen to audio contents enough before deciding whether to buy the second key. The contents provider can prevent illegal use and illegal copying of high sound quality audio contents. Protecting the copyright, the contents provider can urge the user to buy the key.

In Embodiment 2, the high quality sound part 405 is encrypted and the third key is embedded in the basic part 404. Alternatively, the basic part 404 may be encrypted and the third key may be embedded in the high quality sound part 405. In this case, needless to say, for sample playback, high sound quality part alone can be reproduced, and as a result, reproduction will be of low sound quality. In the present embodiment, furthermore, the third key is once extracted from the second key, and the encrypted part is decoded. Alternatively, the encrypted part may be directly decoded using the second key. In this embodiment, however, the third key has to be taken out once, and it can be said that the security is strict. Especially, in case a consumer acquires an illegal copy of an audio signal using such a means that degrades the sound quality greatly, it is impossible to make a high sound quality reproduction because the third key can not be taken out.

### Embodiment 3

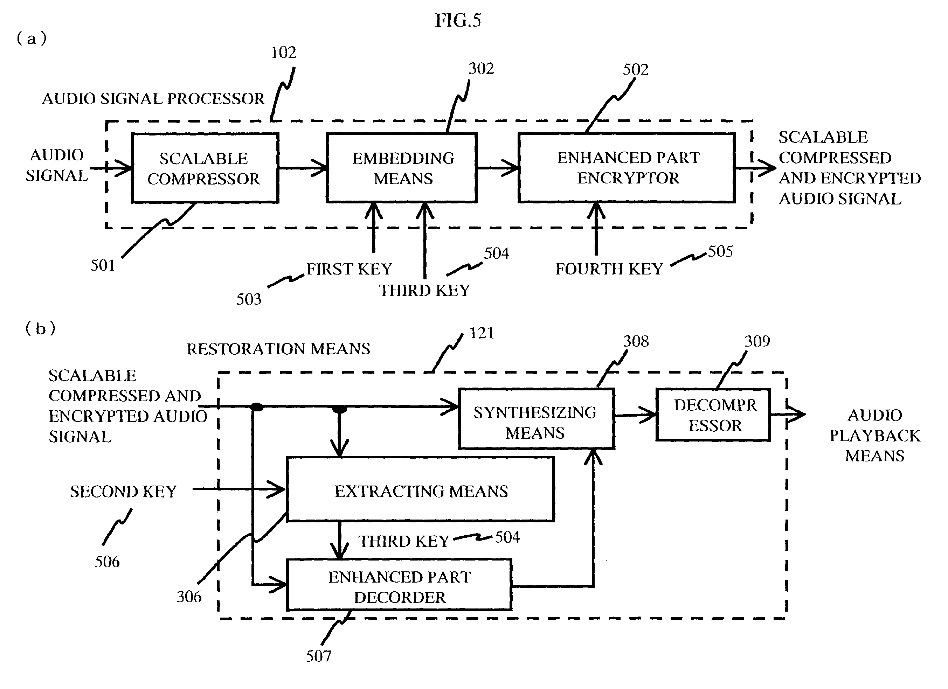

The outline of the audio distribution system according to a third embodiment of the present invention will be explained with reference to FIG. 1 and FIG. 5. The audio distribution system of Embodiment 3 is almost identical with that in Embodiment 2 in configuration, and what is different between the two embodiments will be explained. The audio signal processor 102 in Embodiment 3 is configured as in FIG. 5 (a). That is, the audio signal processor 102 has a scalable compressor 501, an embedding means 302 and an enhanced part encryptor 502. But the embedding means 302 is the same as that in Embodiment 2.

An audio signal inputted in audio signal processor 102 is received by scalable compressor 501. The received audio signal is compressed by scalable compressor 501 and transmitted to embedding means 302.

Here, the scalable compression does not mean a compression not involving separating the audio signal per band as band separation by compressor 301 in Embodiment 2 but involving separating the audio signal into the basic part (main stream) and enhanced part (extension stream). It is a compression method provided for in MPEG (Motion picture Export Group). In other words, in case of scalable compression, the basic part and enhanced part each can contain the whole band in Embodiment 3. That is different where Embodiment 3 is different from Embodiment 2.

As in Embodiment 2, the embedding means 302 embeds the third key 504 as watermark information in the basic part of the scalable compressed audio signal using the first key 503 read out from the storage 107 shown in FIG. 1. However, the watermark information also does not have to be at a sound level audible to the human sense of hearing as in Embodiment 1. Then, the embedding means 302 sends the audio signal with the watermark embedded therein to the enhanced part encryptor 502.

Then, using the fourth key 505 read out from the storage 107, the enhanced part encryptor 502 encrypts the enhanced part prepared by the scalable compressor 501, and sends the same together with the basic part to the distributor 103.

The scalable compressed, encrypted audio signal is sent to the distributor 103, and then received by restoration means 121 in the audio player 111 via the transceiver 112. The process up to that point is the same as in Embodiments 1 and 2. However, the restoration means 121 in Embodiment 3 is configured as FIG. 5 (b) where the present embodiment is different from Embodiments 1 and 2. In other words, an enhanced part decoder 507 is provided in place of the high quality sound part decoder 307 used in Embodiment 2, and another difference is that the decompressor 309 is a decompressor for scalable compression in the present embodiment.

The enhanced part decoder 507 encodes the scalable compressed encrypted part also received from the distribution apparatus 101 and the enhanced part encrypted by the third key 504 read out using the second key 506 at the extracting means, and sends the encrypted enhanced part to the synthesizing means 308. By the way, the third key 504 is key information for the fourth key 505.

The synthesizing means 308 synthesizes the basic part of the scalable compressed, encrypted audio signal received from the distribution apparatus 101 and the encrypted enhanced part received from the enhanced part decoder 507 and sends the same to decompressor 309 as scalable compressed audio signal. The decompressor 309 decompresses the scalable compressed audio signal in a method corresponding to that of the scalable compressor 501. After that, the audio signal outputted from decompressor 309 is reproduced acoustically by the audio playback means 119 as in Embodiments 1 and 2.

Using the second key 506, the third key 504 is extracted and the enhanced part is decoded. But in case the restoration means 121 has not the second key 506, the third key 504 can not be extracted, and therefore, the enhanced part decoder 507 can not decode the encrypted enhanced part. Therefore, the decompressor 309 can not decompress the enhanced part, and the user can not play back the audio content of high sound quality. But the basic part is not encrypted, and the audio content can be played back through poor in sound quality.

Thus, the user can playback sufficiently to the audio contents before deciding whether to buy the second key. The contents provider can prevent the audio contents from being illegally used or illegally copied and thus can protect the copyright strictly. At the same time, the contents provider can urge the user to pay a fee and buy the key.

Even in a general-purpose audio player other than the audio player having the restoration means 121, the scalable compressed and encrypted audio signal can be played back though poor in sound quality.

In this connection, in case audio contents (audio signal) that are not so high in sound quality in themselves are scalable compressed and if the enhanced part is encrypted, it is conceivable that the sound quality does not degrade so much and the sound quality that is not much different from the audio signal before encryption can be played back without the user's buying the second key. In such a case, the enhanced part encryptor 502 may be made a basic part encryptor for encrypting the basic part and the enhanced part decoder 507 may be made a basic part decoder for decoding the basic part. In this case, the third key is embedded in the enhanced part.

### Embodiment 4

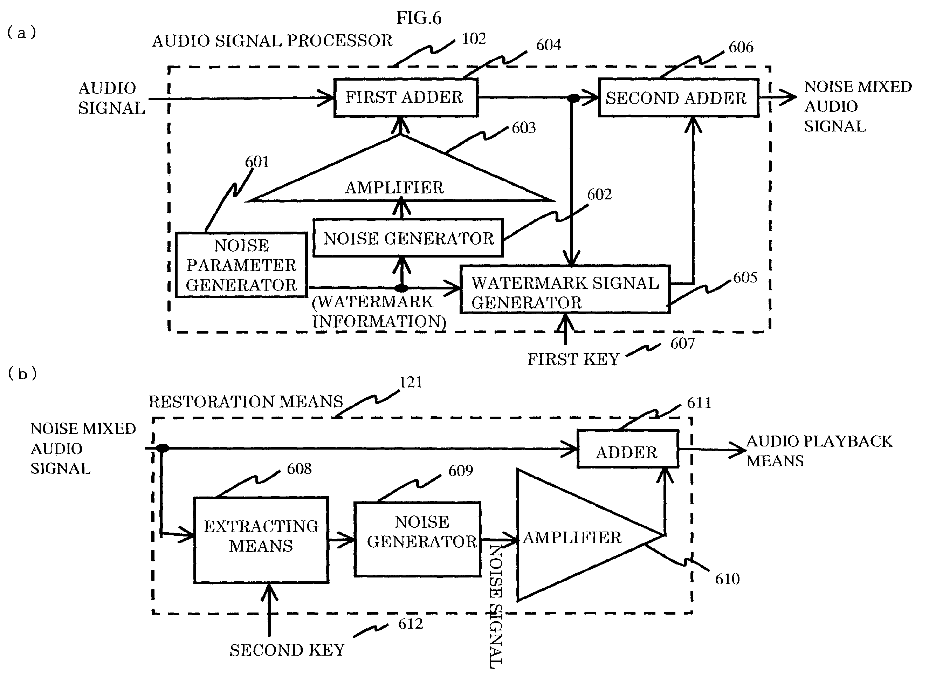

Next, there will be explained the outline of an audio distribution system according to Embodiment 4 of the present invention with reference to FIG. 1 and FIG. 6. The audio distribution system according to Embodiment 4 is almost identical with that of Embodiment 1 in configuration, and what the present embodiment is different from Embodiment 1 alone will be described. Here in Embodiment 4, the audio signal processor 102 is configured as shown in FIG. 6 (a). That is, the audio signal processor 102 is made up of a noise parameter generator 601, a noise generator 602, an amplifier 603, a first adder 604, a watermark signal generator 605 and a second adder 606. But the noise parameter generator 601 does not always have to be within the audio signal processor 102. The noise parameter may be inputted separately from outside.

First when an audio signal is inputted in the first adder 604 in the audio signal processor 102, the noise parameter from the noise parameter generator 601 is inputted in the noise generator 602 and the watermark signal generator 605. The noise generator 602 generates a noise signal on the basis of the noise parameter. Here, the noise parameter is a reference value or the like to produce the noise signal, for example. Any noise generator 602 that will produce noise on the basis of this reference value will serve the purpose. Also, an index will do that selects a noise signal pattern prepared in advance in the noise generator 602. Furthermore, the noise signal may be a sound that makes the listener feel unpleasant. Also it may be an announcement like "This music is for sample playback."

The noise signal that is generated by the noise generator 602 is amplified a specific number of times by amplifier 603, and the noise signal is sent to the first adder 604. The first adder 604 adds the noise signal to the audio signal and sends to the second adder 606 the signal as audio signal of a low sound quality containing noise.

The watermark signal generator 605, which has received a noise parameter, prepares a watermark signal of the noise parameter using the first key read out from the storage 107. In this case, since it is necessary to prepare a watermark signal on the basis of the audio signal of the low sound quality, the audio signal of the low sound quality prepared by the first adder 604 is also inputted in the watermark signal generator 605. But the audio signal of a high sound quality before it is processed by the first adder 604 may be inputted.

The noise parameter watermark signal prepared by the watermark signal generator 605 is sent to the second adder 606 and embedded as watermark signal in the audio signal of a low sound quality also sent from the first adder 604.

The audio signal of the low sound quality with the watermark signal embedded therein is sent to the distributor 103 as noise mixed audio signal.

After having been sent to distributor 103, the noise-mixed audio signal is processed the same way as in Embodiments 1, 2 and 3 up to the point where the signal is received by the restoration means 121 via the transceiver 112 in the audio player 111. However, the restoration means 121 is configured as in FIG. 6 (b) where Embodiment 4 is different from Embodiments 1, 2 and 3. That is, the restoration means 121 is formed of an extracting means 608, a noise generator 609, an amplifier 610 and an adder 611.

If the noise-mixed audio signal is inputted, the extracting means 608 extracts watermark signal, that is, a noise parameter from the noise-mixed audio signal using the second key 612 read out from the storage 114 shown in FIG. 1 and sends the same to the noise generator 609. On the basis of the extracted noise parameter, the noise generator 609 produces the same noise signal as the noise signal produced by the noise generator 602 and sends the same to the amplifier 610.

At the amplifier 610, the noise signal is amplified a specific number of times as was done a specific number of times at amplifier 603. Furthermore, with the amplitude reversed, the noise signal is outputted to the adder 611.

The adder 611 adds the noised-mixed audio signal and the noise signal amplified a specific number of time with the amplitude reversed, and thus can remove the noise signal contained in the noise-mixed audio signal. Then, the audio signal outputted from the adder 611 is reproduced by the audio playback means 119 in the same way as Embodiments 1, 2 and 4. The method of acquiring the second key 612 is the same as that in Embodiments 1, 2 and 3. It goes without saying that the user can not remove the noise signal unless a fee is paid for the second key.

As set forth above, the user can perform sample-playback the audio content enough before deciding whether to buy the second key. The contents provider can prevent the audio contents of high sound quality from being illegally utilized or copied, thus protecting the copyright strictly and urging the user to pay a fee and buy the key.

Announcement can be used as noise signal and will not make the user feel unpleasant when the noise signal is reproduced. Announcement can be used in many ways. Through the announcement, for example, the contents provider informs the user that the noise signal can be removed if the key is purchased, for example.

Furthermore, if the noise parameter itself is the second key, and if there are a plurality of noise parameters, a plurality of noise-mixed audio signals will be prepared. Those different noise-mixed audio signals need different keys (noise parameters). In Embodiment 4, however, the noise parameter is embedded as watermark, and a second key to extract the watermark is prepared separately, whereby one kind of second key alone can control key information with ease even if a plurality of noise-mixed audio signals are prepared with a plurality of noise parameters.

### Embodiment 5

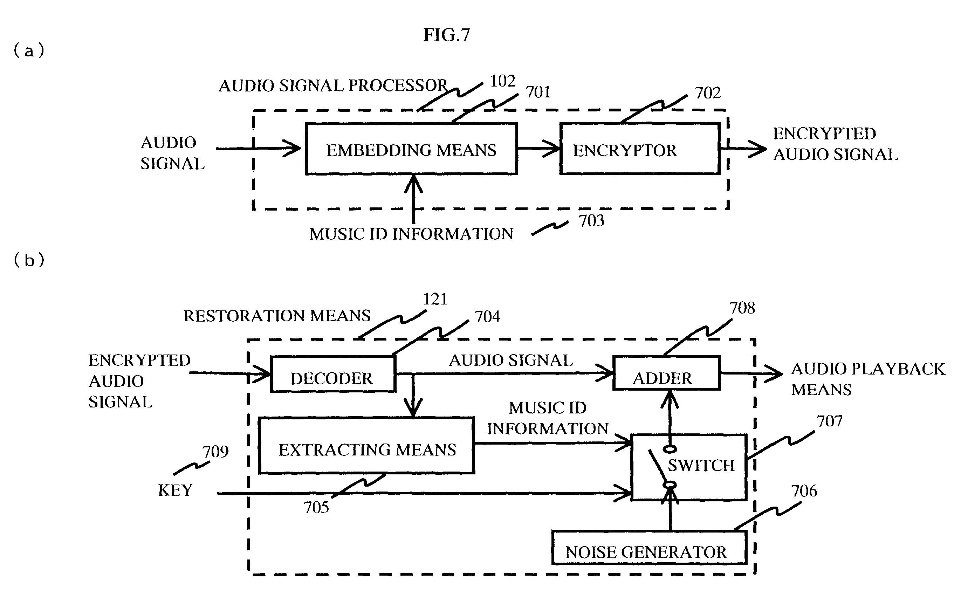

The outline of a audio distribution system according to Embodiment 5 of the present invention will be explained with reference to FIG. 1 and FIG. 7. The audio distribution system in Embodiment 5 is almost identical with that in Embodiment 1 in configuration. What the present embodiment is different from Embodiment 1 alone will be explained. The audio signal processor 102 in Embodiment 5 is configured as shown in FIG. 7 (a). That is, the audio signal processor 102 is formed of an embedding means 701 and an encryptor 702.

First, an audio signal is inputted in embedding means 701 in the audio signal processor 102. Then music ID information read out from the storage 107 is embedded. In this case, the music ID information may be embedded this way. As Embodiment 1, a watermark signal is generated and added to the audio signal. Here, the music ID information is a unique ID for the audio signal (that is, music), and with the ID information, it is possible to specify the audio signal.

Then, the audio signal with the music ID information embedded therein is transmitted to the encryptor 702, encrypted and sent to the distributor 103. Here in the distributor 103, the address information of the distribution apparatus 101 is added to the encrypted audio signal in which the music ID information is embedded and encrypted, but identification information to specify the audio signal is not added, where Embodiment 5 is different from Embodiment 1. That is because the music ID information has already been embedded and there is no need for that.

After having been sent to the distributor 103, the encrypted audio signal is received by the restoration means 121 via the transceiver 112 in the audio player 111 to which the address information is added. The process up to that point is the same as in Embodiments 1 to 4. But the restoration means 121 in Embodiment 5 is configured as shown in FIG. 7 (b), where Embodiment 5 is different from Embodiments 1 to 4. In other words, the restoration means 121 is made up of a decoder 704, an extracting means 705, noise generator 706, a switch 707 and an adder 708.

First, the encrypted audio signal is inputted in the restoration means 121, and then the encrypted audio signal is decoded by the decoder 704 into an audio signal with an music ID information embedded therein. Here, the decoder is so designed as to decode an audio signal encrypted in advance by the encryptor 702. That is, the encrypted audio signal is of the data type that can be reproduced by the audio player 111 only.

Then, the audio signal with the music ID information embedded therein is sent to the extracting means 705 and the adder 708. Receiving the audio signal with the music ID information embedded therein, the extracting means 705 extracts music ID information and sends the music ID information to the switch 707.

The switch 707 reads out the key 709 corresponding to the music ID information from the storage 114 in FIG. 1 on the basis of the extracted music ID information.

Here, in case the key 709 is in the storage 114, the noise signal produced by the noise generator 706 can be shut out by turning off the switch 707 connecting the noise generator 706 and the adder 708.

Because the noise signal is shut down, the adder 708 sends to the audio playback means 119 the audio signal with the music ID information embedded therein without adding the noise signal. The audio playback means 119 can reproduce the audio signal with the music ID information embedded therein, that is, the audio signal of a high sound quality. It goes without saying that the music ID information with the watermark information embedded therein does not degrade the sound quality.

Here, in case there is not the key 709 in the storage 114, and the noise signal produced by the noise generator 706 is sent to the adder 708 by turning on the switch 707 connecting the noise generator 706 and the adder 708. The adder 708 adds the noise signal to the audio signal with the music ID information embedded therein and outputs the same to the audio playback means 119. Therefore, unless the key exclusively for music is not purchased, the switch 707 can not be turned off and the music of a low sound quality with a noise component added thereto alone can be reproduced. The procedure for purchasing the key exclusively for music is the same as that for purchasing the second key as described in Embodiments 1 and 2.

As set forth above, in the present embodiment, too, the user can freely perform sample-playback to the audio contents before deciding whether to buy the key exclusively for music. The contents provider can prevent illegal use or illegal copying of the audio contents of a high sound quality and protect the copyright, and urge the consumer to pay a fee and buy the key.

If the music ID information is just added to the audio signal as identification information, the following problem will arise. If, for example, the audio signal is once D/A (digital-analog) converted, the identification information will be eliminated and the music ID information of the audio signal will be impossible to recognize. The rightful user who has a key exclusively for music can not reproduce the audio signal of a high sound quality. In the present embodiment or Embodiment 5, however, since the music ID information is embedded as watermark, the music ID information will not be lost by D/A (digital/analog) conversion or A/D (analog-digital conversion). The rightful user who has the key exclusively for music can reproduce the audio signal of a high sound quality.

Similarly, mere addition to the audio signal of the music ID information as identification information permits the editing and erasing of music ID information using a binary editor and it could be feared that the audio signal will be modified illegally. In Embodiment 5, however, music ID information is embedded as watermark and it is difficult to modify the music ID information by binary editor etc. That is, the copyright can be protected further strictly.

### Embodiment 6

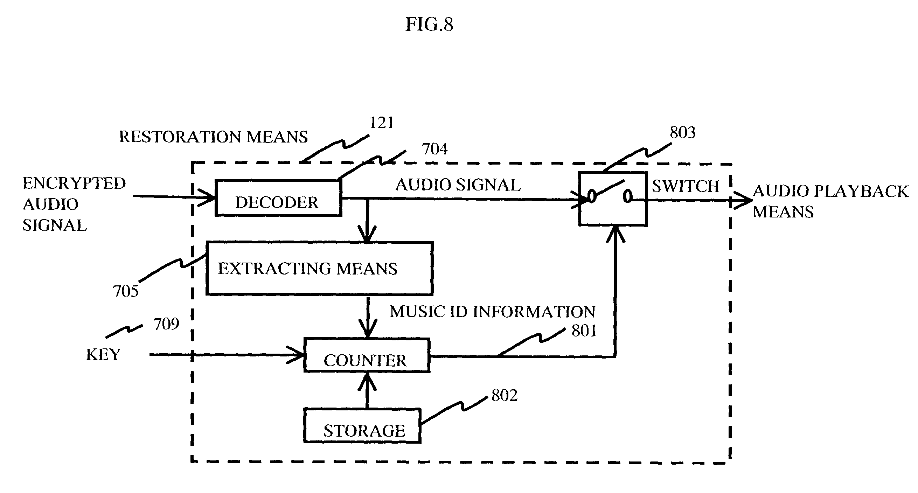

Next, the outline of a audio distribution system according to Embodiment 6 of the present invention will be described with reference to FIG. 1, FIG. 7 and FIG. 8. The audio distribution system in Embodiment 6 is almost identical with that in Embodiment 5 in configuration, and what the present embodiment is different from Embodiment 5 alone will be explained. Here, the audio signal processor 102 in Embodiment 6 is identical in configuration with that in Embodiment 5 shown in FIG. 7 (a). Also, the process up to the following point is the same as that in Embodiment 5. That is, the music ID information read out from the storage 107 is embedded in an inputted audio signal and encrypted by the encryptor 702 into encrypted audio signal, and sent to distributor 103. Then the audio signal is received by the restoration means 121 by way of the transceiver 112 in the audio player 111. The process up to this point is the same. But the restoration means 121 in Embodiment 6 is configured as shown in FIG. 8 and is different from that in Embodiment 5. That is, the restoration means 121 in Embodiment 6 is formed of a decoder 704, an extracting means 705, a counter 801, a storage 802 and a switch 803. In addition, the music ID information contains the permissible number of sample playback as data.

First, the encrypted audio signal is inputted in the restoration means 121. Then, the encrypted audio signal is decoded by the decoder 704 into an audio signal with music ID information embedded therein. Here, the decoder 704 is so designed to decode the audio signal encrypted by the encryptor 702. That is, the encrypted audio signal is of a data type that can be reproduced only by the audio player 111 in Embodiment 6.

Then, the audio signal with the music ID information embedded therein is sent to extracting means 705 and the switch 803. Receiving the audio signal with the music ID information embedded therein, the extracting means 705 extracts music ID information and sends this music ID information to the counter 801.

The counter 801 reads out a key 709 for the music ID information from the storage 114 shown in FIG. 1 on the basis of the extracted music ID information.

Here in case the key 709 is found in the storage 114, the audio signal decoded by the decoder 704 can be sent to the audio playback means 119 by the counter 801 turning on the switch 803 and the audio signal can be immediately played back. As in Embodiment 5, it goes without saying that the music ID information with the watermark information embedded therein is not to degrade the sound quality.

Here in case there is not the key 709 in the storage 114, the counter 801 checks on the basis of the music ID information whether the permissible number of sample playback is memorized in the storage 802. In case the permissible number of sample playback is not memorized, it will be shown that the audio signal with the music ID information is played back for the first time. Furthermore, the number of sample playback in the music ID information is read out, and is memorized in storage 802 along with the music ID information. Here, the permissible number of sample playback is set for every music ID information. Here, the number is at 5, for example.

Then, the counter 801 subtracts one from the permissible number of sample playback memorized in the storage 802 and sets the number at 4 and turns on the switch 803. In case the number of sample playback is already memorized, it will be judged whether the number of sample playback is larger than 0. If so, 1 is subtracted and the switch 803 is turned on. If the number of sample playback is 0, the switch 803 will be turned off. If the switch 803 is turned off, the audio signal with the music ID information embedded therein will not be sent to the audio playback means 119. That is, the audio signal can not be reproduced.

Therefore, the user who has not bought a key exclusively for music can perform sample-playback to the audio signal a number of times memorized in advance in music ID information. When the number of playback left decreases to 0, that is, the audio signal has been listened the permissible number of times, the audio signal can not be reproduced any more. The key 709 is purchased in the same way as the second key in Embodiment 1.

As set forth above, in Embodiment 6, the user can perform sample-playback the audio signal a specific number of times before deciding whether to buy the key exclusively for music. The contents provider can prevent illegal use or copying of audio contents of a high sound quality, protect the copyright and urge the consumer to pay a fee and buy a key.

As in Embodiment 5, furthermore, the music ID information will not be lost by the D/A conversion of the audio signal etc., and the rightful owner of key exclusively for music can reproduce the audio signal of a high sound quality. In addition, the music ID information is difficult to modify by binary editor etc., thus the copyright is further strictly protected.

## Claims

1. An audio signal processor processing an audio signal for changing a format distributable through a network, which comprising:
embedding means for embedding in said audio signal a watermark of which a signal level audible to the human sense of hearing when the audio signal is played back.

2. The audio signal processor according to claim 1,which further comprising:
a compressor for compressing said watermark embedded audio signal according to a specific method, said compressor provided after said embedding means.

3. The audio signal processor according to claim 1, which further comprising:
a compressor for compressing said watermark embedded audio signal according to a specific method, said compressor provided before said embedding means.

4. The audio signal processor according to claim 1,which comprising:
watermark signal generator for generating a watermark using said audio signal alone that is inputted into said watermark signal generator, said generator provided in said embedding means.

5. An audio player playing back an audio signal distributed through a network, which comprising:
removing means for removing a watermark from a watermark embedded audio signal using a specific key, said watermark of which a signal level is audible to the human sense of hearing.

6. An audio distribution system including a distribution apparatus for distributing an audio signal through a network and an audio player for playing back said distributed audio signal,
wherein said distribution apparatus comprises embedding means for embedding in said audio signal a watermark of which a signal level is audible to the human sense of hearing when the audio signal is played back; and
wherein said audio player comprises removing means for removing a watermark from said watermark embedded audio signal using a specific key.

7. An audio distribution method wherein a sending side process an audio signal for changing the format distributable through a network and a receiving side plays back said audio signal, which comprising:
embedding a watermark in said audio signal at the processing, said watermark of which a signal level is audible to the human sense of hearing when the audio signal is played back ; and
removing a watermark from said watermark embedded audio signal using a specific key at the playback.

8. An audio signal processor for processing an audio signal for changing the format distributable through a network, which comprising:
a separator for separating said audio signal according to a specific rule;
embedding means for embedding a key as a watermark in at least a specific audio signal of said separated audio signals; and
encryption means for encrypting an audio signal other than said separated audio signals in which said watermark is embedded.

9. An audio player playing back an audio signal distributed through the network, which comprising:
extracting means for extracting a second key embedded as a watermark from a specific area within said audio signal using a first key; and
a decoder for decrypting an encrypted area within said audio signal using said second key extracted by said extracting means.

10. An audio signal processor processing an audio signal for changing the format distributable through a network, which comprising:
a band separator for separating said audio signal into a plurality of frequency band signals having a specific frequency band respectively;
embedding means for embedding a key as a watermark in a specific frequency band signal having the specific frequency band of said plurality of frequency band signals; and
a high quality sound part encryptor for encrypting a frequency band signal other than said plurality of frequency band signals in which said watermark is embedded.

11. An audio player playing back audio signal distributed through a network, which comprising:
extracting means for extracting a second key embedded as a watermark from a band signal having a specific frequency band within said audio signals using a first key; and
a high quality sound part decoder for decrypting a encrypted frequency band signal having specific frequency bands within said audio signals using said second key extracted by said extracting means.

12. An audio signal processor processing an audio signal for changing the format distributable through a network, which comprising:
a scalable compressor for separating the audio signal into a basic part and a enhanced part using the method of scalable compression;
embedding means for embedding a key as a watermark in either the basic part or the enhanced part; and
an encryptor for encrypting using a specific key either the basic part or the enhanced part whichever said watermark is not embedded in.

13. An audio player for playing back an audio signal distributed through a network, which comprising:
extracting means for extracting a second key, using a first key, embedded as a watermark from either said basic part or said enhanced part within said audio signal which is compressed by scalable compression and encrypted; and
a decoder for decrypting, using said second key extracted by said extracting means, either the basic part or the enhanced part whichever said watermark is not embedded in.

14. An audio distribution system including a distribution apparatus for distributing an audio signal through a network, and an audio player playing back said distributed audio signal,
wherein said distribution apparatus comprises:
a separator for separating said audio signal according to a specific rule,
embedding means for embedding a first key as a watermark in a specific audio signal of said separated audio signals;
encryption means for encrypting a audio signal other than separated audio signals in which said watermark is embedded; and
wherein said audio player comprises:
extracting means for extracting said first key embedded as a watermark in said specific signal, using said second key; and
a decoder for decrypting the audio signal in which watermark is not embedded, using said first key extracted from said extracting means.

15. An audio distribution method wherein a sending side processes an audio signal for changing the format distributable through a network, and a receiving side plays back said audio signal, which comprising:
in the processing,
separating the audio signal according to a specific rule;
embedding a first key as watermark in a specific audio signal of said separated audio signals;
encrypting the audio signal other than said separated audio signals in which said watermark is embedded; and
in the playing back,
extracting said first key embedded as a watermark in said specific signal using said second key; and
decrypting the audio signal, in which said watermark is not embedded, using said extracted first key.

16. An audio signal processor processing an audio signal for changing to the format distributable through a network, which comprising:
noise parameter generator for generating a noise parameter for producing a noise;
noise generator for producing a noise signal on the basis of the noise parameter generated by said noise parameter generator;
a amplifier for amplifying said noise signal to a signal level audible to the human sense of hearing when the signal is played back;
a first adder for adding to said audio signal said noise signal amplified by said amplifier;
a watermark signal generator for generating a watermark signal with the noise parameter as a watermark using a key; and
a second adder for adding said watermark signal generated by said watermark signal generator to an audio signal to which noise signal is added by said first adder.

17. An audio player playing back an audio signal distributed through a network, which comprising:
watermark signal extracting means for extracting a noise parameter for producing a noise signal using a specific key, said noise parameter contained as a watermark in said audio signal;
a noise generator for generating a noise signal on the basis of said extracted noise parameter;
an amplifier for amplifying said noise signal a specific number of times and reversing the amplitude; and
an adder for adding to said audio signal a noise signal that is amplified a specific number of times and of which the amplitude is reversed.

18. An audio signal processor processing an audio signal for changing to the format distributable through a network, which comprising:
watermark embedding means for embedding music ID information as a watermark in an audio signal, said music ID information specifying said audio signal; and
encryption means for encrypting said audio signal embedded with the watermark.

19. An audio player playing back an audio signal distributed through a network, which comprising:
a decoder for decrypting said encrypted audio signal;
watermark extracting means for extracting music ID information contained as a watermark in said decrypted audio signal, said music ID information specifying said audio signal;
a noise generator for generating noise signal to degrade said audio signal;
an adder for adding said decrypted audio signal and the noise signal generated by said noise generator; and
a switch for turning on or off the inputting of said noise signal to said adder in a result that a specific key corresponding to said extracted music ID information is present or not.

20. An audio signal processor processing an audio signal for changing to the format distributable through a network, which comprising:
watermark embedding means for embedding as a watermark a music ID information in said audio signal, said music ID information including information for specifying said audio signal and indicating permissible numbers of sample playback; and
encryption means for encrypting said audio signal embedded with a watermark.

21. An audio player playing back an audio signal distributed through a network, which comprising:
a decoder for decrypting said encrypted audio signal;
a watermark extracting means for extracting an music ID information contained in said decrypted audio signal as an watermark, said music ID information including information for specifying said audio signal and indicating permissible numbers of sample playback;
a storage for storing said extracted music information associating said information specifying said audio signal and said information indicating permissible numbers of sample playback; and
a counter for deciding whether the decrypted audio signal is played back or not in a result that a specific key corresponding to the extracted music ID information is present or not and what the numbers of sample playback indicates.
